(19) Europäisches Patentamt
European Patent Office
Office européen des brevets

(11) **EP 4 298 075 B1**

(12) **FASCICULE DE BREVET EUROPEEN**

(45) Date de publication et mention
de la délivrance du brevet:
**22.10.2025  Bulletin 2025/43**

(21) Numéro de dépôt: **22705748.6**

(22) Date de dépôt: **04.02.2022**

(51) Classification Internationale des Brevets (IPC):
**C04B 35/111** *(2006.01)*      **C04B 35/563** *(2006.01)*
**C04B 35/565** *(2006.01)*      **C04B 35/58** *(2006.01)*
**C04B 38/00** *(2006.01)*       **C04B 38/06** *(2006.01)*
**F41H 5/04** *(2006.01)*        **F41H 7/00** *(2006.01)*

(52) Classification Coopérative des Brevets (CPC):
(C-Sets disponibles)
**C04B 35/111; C04B 35/563; C04B 35/565;
C04B 35/5805; C04B 38/067; F41H 1/04;
F41H 5/0414;** C04B 2235/77            (Cont.)

(86) Numéro de dépôt international:
**PCT/EP2022/052753**

(87) Numéro de publication internationale:
**WO 2022/179830 (01.09.2022 Gazette 2022/35)**

(54) **BLINDAGE CÉRAMIQUE À DISPERSION DE TAILLE DE PORES CONTRÔLÉE**

KERAMISCHE PANZERUNG MIT KONTROLLIERTER PORENGRÖSSENSTREUUNG

CERAMIC SHIELDING WITH CONTROLLED PORE SIZE DISPERSION

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité:  **23.02.2021  FR 2101719**

(43) Date de publication de la demande:
**03.01.2024  Bulletin 2024/01**

(73) Titulaire: **SAINT-GOBAIN CENTRE DE
RECHERCHES
ET D'ETUDES EUROPEEN
92400 Courbevoie (FR)**

(72) Inventeurs:
• **BRULIN, Jérôme
13310 SAINT-MARTIN DE CRAU (FR)**
• **ROSSIQUET, Gilles
16100 LOUZAC SAINT-ANDRÉ (FR)**
• **GRAVELEAU, Matthieu
84000 AVIGNON (FR)**

(74) Mandataire: **Zimmermann & Partner
Patentanwälte mbB
P.O. Box 330 920
80069 München (DE)**

(56) Documents cités:
EP-A2- 0 578 408        WO-A2-2009/102815
US-A1- 2008 227 618     US-A1- 2010 004 115

(52) Classification Coopérative des Brevets (CPC):
(Cont.)

C-Sets
**C04B 38/067, C04B 35/563, C04B 38/0054,
C04B 38/0064, C04B 38/0074**

**Description**

L'invention se rapporte à un élément en céramique pouvant être utilisé comme élément d'armures ou de blindage permettant de protéger des personnes, des véhicules (terrestres, maritimes ou aériens) ou des installations fixes (bâtiment, mur d'enceinte, poste de garde notamment).

En particulier, la masse supplémentaire liée au port d'un blindage est un élément essentiel qu'il s'agisse de la protection des personnes mais aussi vis à vis des véhicules, pour lesquels un alourdissement excessif est un obstacle aux déplacements rapides et limite leur rayon d'action.

On connait en particulier des systèmes formés par l'assemblage dit « mosaïque » de pièces céramiques ayant une forme polygonale déterminée et résistantes individuellement à l'impact d'un projectile. JP2005247622A décrit par exemple un arrangement de telles formes de 20 à 100 mm de largeur, pour une épaisseur de quelques mm. Ce type de mosaïques de pièces présente l'avantage de résister à des tirs successifs (protection dite « multi-shot » ou « multi-hit » en anglais).

Il existe d'autres systèmes dits monolithiques, c'est à dire formés par une seule pièce ou encore par un nombre très limité de pièces de grande surface, chaque monolithe ayant une surface d'impact supérieure à 100 cm$^2$, de façon à réduire le nombre de joints.

De nombreux matériaux ont été proposés pour constituer une armure destinée aux personnes dont le rapport masse de blindage sur surface de protection doit rester faible, typiquement moins de 50 kg/m$^2$, ou un blindage non personnel destiné à des véhicules ou des installations fixes dont le rapport masse sur surface de protection (ou densité surfacique) est supérieur typiquement à 50 kg/m$^2$ mais inférieur de préférence à 150 kg/m$^2$.

Les métaux sont couramment utilisés comme blindage mais ils présentent une densité surfacique élevée.

Plus récemment ont été proposés des produits à base de céramique non oxyde dont le rapport masse sur surface de blindage ou densité surfacique est plus faible, pour une résistance à l'impact équivalente.

On connaît par exemple de US4604249 ou US4415632 des produits poreux de carbure de silicium (SiC) utilisables comme blindage obtenus par frittage puis imprégnés de métal. D'autres brevets, comme par exemple, US6609452B1 ou US6862970B2, ont proposé d'autres solutions d'armures comprenant des grains de SiC liés par une phase métallique de silicium. Les performances balistiques de ce type de composite, à densité surfacique similaire, sont apparues cependant plus faibles qu'un matériau fritté dense de SiC. Un matériau à base de SiC dense fritté sans pression est par exemple connu de US4004934 ou encore de US4179299. Plus récemment WO2007126784A2 a proposé d'augmenter encore la résistance à la ténacité du matériau de SiC, c'est à dire sa capacité à résister à la propagation d'une fissure, en apportant des additifs. WO2013186453A1 propose de modifier la taille et la forme de grains, l'objectif étant d'atteindre une densité relative supérieure à 99% soit une porosité inférieure à 1%. Malgré ce niveau de densité, les inventeurs se sont aperçus qu'il était encore possible d'augmenter la performance balistique. US 2008/227618 divulgue un elément de blindage antibalistique comprenant un matériau fritté constitué de grains céramiques de dureté élevée et ayant une prorosité inférieure à 10%.

L'objet de la présente invention est donc de proposer un matériau de blindage en céramique, de préférence fritté sans pression, dont les performances balistiques sont améliorées. En particulier, il existe aujourd'hui un besoin pour un blindage capable de résister à la perforation et plus particulièrement à des impacts successifs par des projectiles ayant une forte énergie cinétique, tout en présentant une masse volumique apparente faible, typiquement inférieure à 4,0 g/cm$^3$, de préférence inférieure à 3,5 g/cm$^3$ ou même inférieur à 3,2 g/cm$^3$, afin de protéger des personnes ou des véhicules (terrestres, maritimes voire aériens) voire des installations fixes, telles que des bâtiments.

Résumé de l'invention :

Selon un premier aspect général, la présente invention se rapporte à un élément de blindage antibalistique, présentant de préférence une surface d'impact, en particulier plane et/ou courbe, et comprenant un corps céramique constitué dans un matériau qualifié de dur. Le corps céramique est généralement muni sur sa face intérieure ou opposée à la face d'impact d'un revêtement arrière de dissipation de l'énergie, de préférence constitué dans un matériau de dureté inférieure à celui du matériau constituant le corps céramique.

Plus précisément, la présente invention se rapporte à un élément de blindage ou de protection antibalistique selon la revendicatior comprenant un corps céramique comprenant, de préférence constitué par, un matériau fritté constitué de grains céramiques de dureté Vickers supérieure à 5 GPa, de préférence dont au moins 95% en nombre ont un diamètre compris entre 1 et 50 micromètres, le volume total des pores dudit matériau étant compris entre 0,5 et 10% du volume dudit matériau, ledit corps céramique étant caractérisé en ce que :

- le volume cumulé des pores de diamètre compris entre 30 et 100 micromètres représente entre 0,2 et 2,5% du volume dudit matériau,
- le volume cumulé des pores de diamètre supérieur à 100 micromètres est inférieur à 0,2% du volume dudit matériau, et

- le reste dudit volume total de pores étant constitué par des pores dont le diamètre est inférieur à 30 micromètres, dans lequel la distribution en volume du diamètre des pores dudit matériau est multimodale et comprend au moins un premier pic dont le maximum est compris dans un intervalle de diamètre de pores compris entre 0,1 et 15 micromètres et un deuxième pic dont le maximum est compris dans un intervalle de diamètre de pores compris entre 40 et 80 micromètres.

Selon une caractéristique essentielle et avantageuse de la présente invention, le corps céramique est légèrement poreux, ce qui est favorable à l'allègement du blindage mais il est pourtant possible d'augmenter sensiblement sa performance balistique grâce à un contrôle très fin de sa porométrie. Ledit contrôle peut avantageusement être effectué en combinaison avec le contrôle de la taille des grains du matériau qui le compose. La porosité, autrement dit le volume total des pores, le diamètre des pores peuvent être déterminés à partir de microtomographie aux rayons X.

Le diamètre des grains peut être déterminé à partir de l'observation de la microstructure du matériau fritté classiquement grâce à des images au microscope électronique à balayage d'une coupe ou section polie dudit matériau fritté réalisé sur au moins 500 grains, de préférence au moins 600 grains, par exemple sur une image d'au moins $100 \times 100$ micromètres, de préférence sur une image d'au moins $100 \times 150$ micromètres. Une porosité supérieure à 10% en volume a pour effet de réduire la résistance balistique de l'élément de blindage. Une porosité inférieure à 0,5% en volume contribue à augmenter son rapport masse sur surface de protection.

Le corps céramique de l'élément de blindage selon l'invention, peut présenter une ou plusieurs des caractéristiques préférées suivantes :

- le volume cumulé de pores de diamètre compris entre 30 et 100 micromètres dudit matériau fritté est supérieur à 0,3%, de préférence supérieur à 0,5%, de préférence supérieur à 1% et/ou inférieur à 2,3%, de préférence inférieur à 2%, de préférence inférieur à 1,5% du volume dudit matériau.
- le volume cumulé de pores dudit matériau fritté de diamètre supérieur à 100 micromètres est inférieur à 0,1%, de préférence inférieur à 0,05% du volume dudit matériau.
- le volume cumulé de pores dudit matériau fritté de diamètre inférieur à 30 micromètres est compris entre 0,5% et 2 % du volume dudit matériau. Notamment, le volume cumulé de pores de diamètre inférieur à 30 micromètres dudit matériau fritté est inférieur à 1,5%, ou même inférieure à 1% du volume dudit matériau.

- le volume cumulé de pores de diamètre supérieur à 80 micromètres dudit matériau fritté est inférieur à 0,8%, de préférence inférieur à 0,5% du volume dudit matériau.
- le volume cumulé de pores de diamètre compris entre 40 et 80 micromètres dudit matériau fritté est supérieur à 0,5 et/ou inférieur à 1,5% du volume dudit matériau.
- le volume cumulé de pores inférieur à 40 micromètres dudit matériau fritté est inférieur à 1,5%, de préférence inférieur à 1%, en volume dudit matériau.
- ledit premier pic présente un maximum compris entre 0,5 et 10 micromètres, de préférence entre 0,5 et 5 micromètres.
- ledit deuxième pic présente un maximum supérieur à 45 micromètres, supérieur ou égal à 50 micromètres, et/ou inférieur à 60 micromètres.
- le rapport entre le maximum dudit deuxième pic et celui dudit premier pic de la distribution bimodale de pores est supérieur à 3, de préférence supérieur à 5 et/ou inférieur à 20, de préférence inférieur à 15.
- Selon un mode particulièrement avantageux, au moins 70% en volume, de préférence au moins 80% en volume, des pores de diamètre supérieur à 30 micromètres dudit matériau fritté présente une sphéricité supérieure à 0,8. Cette caractéristique particulièrement favorable montre la non agglomération des macropores illustrant l'homogénéité de leur dispersion.
- Selon un autre mode possible, au moins 70% en volume, de préférence au moins 80% en volume, des pores de diamètre supérieur à 30 micromètres dudit matériau fritté présente une sphéricité inférieure à 0,5. En particulier l'usage de porogène de forme aciculaire, par exemple de fibre organique, peut d'avérer très avantageux pour des éléments de blindage de faible épaisseur et/ou de face d'impact présentant une surface courbe, la plus grande longueur de pores étant de préférence perpendiculaire à la face d'impact.
- le volume total des pores dudit matériau fritté est compris entre 0,5 et 5% du volume dudit matériau, de préférence entre 1 et 4% dudit volume, notamment entre 1 et 3% dudit volume.
- les grains céramiques constituant ledit matériau fritté sont choisis parmi des grains d'alumine, des grains de carbure de silicium, des grains de carbure de bore, ou des grains comprenant un borure, en particulier et par exemple l'hexaborure de calcium. Selon un mode possible, ledit matériau fritté est constitué essentiellement de grains de matériau non oxyde, de préférence du carbure de silicium, hormis les impuretés et/ou phases résiduelles sous forme de métaux, de métalloïdes ou d'oxydes. De préférence, la teneur en SiC des grains est supérieure à 95% en masse. De préférence les grains de carbure de silicium sont sous forme cristallographique alpha ($\alpha$).

- au moins 95% en nombre des grains céramiques constituant ledit matériau fritté ont un diamètre supérieur à 2 micromètres et/ou inférieur à 30 micromètres, de préférence inférieur à 20 micromètres, de manière plus préférée inférieur à 15 voire inférieur à 10 micromètres.
- Le diamètre médian des grains céramiques, en nombre, du matériau est compris entre 1 et 20 micromètres, de préférence entre 2 et 10 micromètres.
- Selon un mode possible ledit matériau fritté est constitué essentiellement de grains de matériau non oxyde, de préférence du carbure de silicium, hormis les impuretés et/ou phases résiduelles sous forme de métaux, de métalloïdes ou d'oxydes. De préférence, la teneur en SiC des grains est supérieure à 95% en masse.

De préférence les grains de carbure de silicium sont sous forme cristallographique alpha ($\alpha$).

- Selon un mode possible le matériau fritté est constitué essentiellement de grains de matériau non oxyde, de préférence du carbure de silicium, et comprend en pourcentage massique moins de 3% d'oxygène élémentaire, entre 0,5 et 4% d'autres éléments choisis parmi C libre, B, Ti, Al, Y, Zr utilisés comme additifs de frittage, le reste étant des impuretés inévitables notamment celles choisies parmi Fe, Si libre, Mo, les alcalins et alcalino-terreux. De préférence, la teneur en carbone libre est inférieure à 1,5%, de manière plus préférée inférieure à 1% en masse dudit matériau.
- Selon un mode possible le matériau fritté est constitué essentiellement de grains d'oxyde, de préférence d'alumine, et comprend en pourcentage massique entre 0,5 et 4% d'autres éléments choisis parmi, B, Ba, Ca, Mg, Si, Ti, Y, Zr utilisés sous différentes formes, par exemple sous forme d'oxyde, comme additifs de frittage, le reste étant des impuretés inévitables notamment celles choisies parmi les oxydes de Fe, d'alcalins et alcalino-terreux.
- Selon un mode possible ledit corps céramique est monolithique, ou constitué d'une seule pièce dudit matériau fritté, de surface d'impact supérieure à 100 cm$^2$, et/ou d'épaisseur supérieure à 3 mm. De préférence, ledit corps céramique présente une surface d'impact supérieure à 150 cm$^2$, supérieure à 500 cm$^2$, ou encore supérieure à 1000 cm$^2$ ledit corps céramique présente une épaisseur supérieure à 4 mm, de préférence encore supérieure à 5 mm et/ou inférieure à 50mm, de préférence inférieure à 30mm.

- Ledit corps céramique est monolithique et présente une surface d'impact supérieure à 2 cm$^2$ et une épaisseur supérieure à 3 mm.
- selon un autre mode possible, ledit corps comprend un assemblage de pièces polygonales dont au moins 50%, de préférence plus de 80% en nombre, ont une épaisseur supérieure à 3 mm et une surface supérieure à 2 cm$^2$ sont constituées dudit matériau fritté. Les pièces polygonales peuvent présenter une ou plusieurs surfaces d'impact de forme plane ou courbe.
- Ledit corps céramique peut présenter une surface plane ou une surface avec une ou plusieurs courbures. Le corps céramique peut être une forme simple ou complexe, pleine ou présenter une cavité, telle que par exemple un tube. De préférence, le corps céramique est choisi parmi une plaque, un plastron, un casque, un élément de carrosserie d'un véhicule, un tube.
- Le ratio masse sur surface ou densité surfacique dudit corps céramique, mesuré(e) en kg/m$^2$, est inférieur(e) à 100, de préférence inférieur à 50.
- L'élément de blindage antibalistique, présente une surface d'impact, en particulier plane et/ou courbe, comprenant un corps céramique comprenant, de préférence constitué par, un matériau dur tel que décrit précédemment, muni sur sa face intérieure ou opposée à la face d'impact d'un revêtement arrière de dissipation de l'énergie, de préférence constitué dans un matériau de dureté inférieure à celui du matériau constituant le corps céramique.
- Le matériau constituant le revêtement arrière est choisi parmi les polyéthylènes PE, notamment les polyéthylènes ultra haute densité (UHMPE), les fibres de verre ou de carbone, les aramides, les métaux tel que l'aluminium, le titane ou leur alliages ou l'acier.
- L'ensemble corps céramique-revêtement arrière est entouré par une enveloppe d'un matériau de confinement.
- le matériau constituant l'enveloppe est choisi parmi les polyéthylènes PE, notamment les polyéthylènes ultra haute densité (UHMPE), les fibres de verre ou de carbone, les aramides, les métaux tel que l'aluminium ou l'acier.

L'invention se rapporte également à l'utilisation d'un l'élément de blindage comprenant un corps céramique dont les caractéristiques viennent d'être décrites précédemment, comme protection antibalistique d'une personne ou d'un véhicule terrestres, maritimes ou aériens ou d'une installation fixe comme un bâtiment, un mur d'enceinte, ou un poste de garde , en particulier sous la forme d'une plaque, d'une tuile, d'une mosaïque, par exemple sous forme d'hexagones ou de nodules, d'un plastron, d'un bouclier, d'un casque, d'un élément de carrosserie d'un véhicule tel que qu'une porte, d'un siège, d'un tube.

Sans qu'il soit besoin ici de répéter, par mesure de concision, l'ensemble des caractéristiques techniques déjà décrites précédemment en relation avec la plage de blindage, un corps céramique selon l'invention couvre bien entendu l'ensemble des mêmes modes préférés.

Définitions :

On donne les indications et définitions suivantes, en relation avec la description précédente de la présente invention :

- Le diamètre des pores et le volume de pores peuvent être déterminés par microtomographie, en particulier par microtomographie aux rayons X. Par exemple, un échantillon de volume supérieur à 15 mm$^3$ est scanné dans un tomographe nanofoyer de manière à rapprocher au maximum l'échantillon de la source et ainsi obtenir une haute résolution de l'ordre de 0,3 à 3 $\mu$m$^3$/voxel. La résolution peut être adaptée à la population de pores étudiée. Un temps d'acquisition d'environ 3h permet d'obtenir une reconstruction peu bruitée. L'image volumique obtenue constituée de différents niveaux de gris est binarisée, par exemple à l'aide d'un logiciel IMorph, afin d'individualiser les pores, les grains, voire d'autres phases présentes tel que par exemple une phase métallique éventuelle.

Il est ainsi possible d'en déduire une distribution en volume ou en nombre cumulée ou non de pores en fonction de leur diamètre, ledit diamètre d'un pore correspondant à celui d'une sphère de même volume que celui dudit pore. Par intégration, il est possible de mesurer le volume ou le nombre total de pores dudit matériau.

- On entend par distribution multimodale de pores, le fait que le spectre de distribution présente plusieurs maxima individualisables, chaque maximum correspondant à un maximum de la courbe de distribution de volume de pores dans un intervalle donné de diamètres de pores.
- Au sens de la présente description et sauf mention contraire, le diamètre médian des pores désigne le diamètre de pores au-dessous duquel se trouve 50% en volume de la population de pores.
- Le diamètre des grains est déterminé à partir de l'observation de la microstructure du matériau céramique fritté classiquement grâce à des images prises en MEB (microscopie électronique à balayage) sur une coupe d'un échantillon du produit fritté comprenant un nombre suffisant de grains, notamment au moins 500 grains, voire au moins 600 grains, de préférence après une attaque chimique visant à révéler les grains et leurs joints, l'attaque chimique au réactif de Murakami consistant à plonger l'échantillon poli pendant 15 minutes dans un mélange porté à ébullition d'eau d'hexacyanoferrate de potassium et de potasse. Le diamètre de grain ainsi mesuré (aussi appelé diamètre équivalent de grains dans la littérature) correspond au diamètre d'un disque de surface équivalente audit grain, tel qu'observé en deux dimensions sur l'image MEB.

Il est possible de déterminer à partir de la distribution de diamètre de grains le pourcentage de grains, en nombre, dont le diamètre est compris entre 1 et 50 micromètres, le diamètre médian de grain (ou percentile $D_{50}$), c'est-à-dire le diamètre divisant les grains en première et deuxième populations égales en nombre, ces première et deuxième populations ne comportant que des grains présentant un diamètre supérieur, ou inférieur respectivement, au diamètre médian. Il est de même possible de déterminer les percentiles 10 ($D_{10}$) ou 90 ($D_{90}$) d'une distribution de grains dudit matériau selon l'invention correspondant respectivement aux pourcentages, en nombre, de 10% ou 90% sur la courbe de distribution de cumulée de diamètres de grains classés par ordre croissant. Par exemple, 10 %, en nombre des grains ont un diamètre inférieur à $D_{10}$ et 90 % des particules en nombre ont une taille supérieure à $D_{10}$.
- la porosité du matériau fritté, c'est-à-dire le volume total de ses pores, peut être calculée par intégration des volumes de tous les pores mesurés par microtomographie.
- On entend par sphéricité d'un pore ou d'une particule, le rapport entre la surface d'une sphère de diamètre correspondant au diamètre dudit pore ou de ladite particule et la surface interne dudit pore ou la surface externe de ladite particule. Une sphéricité parfaite est donc égale à 1. Un pore ou une particule est d'autant plus allongé que sa sphéricité est très inférieure à 1.
- Par masse volumique apparente d'un corps céramique, on entend au sens de la présente invention, le rapport égal à la masse du produit divisée par le volume qu'occupe ledit produit.
- L'identification et la composition chimique des grains peut être aussi réalisée par des techniques telles qu'un microscope électronique à balayage par analyse en électrons rétrodiffusés voire par spectroscopie à rayons X à dispersion d'énergie (ou EDS, abréviation de l'anglais *« Energy Dispersive X-ray Spectroscopy »*).
- La dureté Vickers de grains peut être mesurée à l'aide d'une pointe pyramidale normalisée en diamant de base carrée et d'angle au sommet entre faces égal à 136°. L'empreinte réalisée sur le grain a donc la forme d'un carré; on mesure les deux diagonales d1 et d2 de ce carré à l'aide d'un appareil optique. La dureté est calculée à partir de la force appliquée sur la pointe diamantée et la valeur d moyenne de $d_1$ et $d_2$ selon la formulation suivante :

$$H_V = 0,189 \cdot \frac{F}{d^2}$$

avec

$H_V$ = Dureté Vickers
$F$ = Force appliquée [N]
$d$ = Moyenne des diagonales de l'empreinte [mm]

La force et la durée de l'appui sont également normalisées. La norme de référence pour les matériaux céramiques ou cermet est la norme ASTM C1327:03 « Standard Test Method for VICKERS Indentation Hardness of Advanced Ceramics ».

- Lors du frittage, la température étant élevée, les grains peuvent grossir sensiblement par rapport à la taille qu'ils présentaient dans la charge de départ. Dans le corps céramique fritté, les grains représentent ensemble sensiblement 100% de la masse du produit. Le matériau fritté peut être fritté en phase solide ou en phase liquide. A la différence d'un frittage dit en phase liquide, le processus de cuisson du matériau selon l'invention est de préférence réalisé en phase solide, c'est-à-dire qu'il s'agit d'un frittage dans lequel aucun des additifs ajoutés permettant le frittage, ou encore aucune phase formée à partir de la combinaison de certains de ces additifs, voire aucune impureté du produit à fritter, n'est susceptible de former une phase liquide en une quantité telle qu'elle soit suffisante pour permettre le réarrangement des grains et les amener ainsi au contact les uns des autres. C'est en particulier le cas lorsqu'aucune phase liquide n'est créée pendant le frittage. Un matériau obtenu par frittage en phase solide est communément appelé « fritté en phase solide ».

- Par additif de frittage, souvent plus simplement appelé «additif» dans la présente description, on entend un composé connu habituellement pour permettre et/ou accélérer la cinétique de la réaction de frittage.

- Les teneurs chimiques élémentaires du matériau fritté ou des poudres utilisées dans le mélange du procédé de fabrication dudit matériau sont mesurées selon les techniques bien connues de l'art. En particulier les teneurs en éléments tels que Al, B, Ti, Zr, les alcalins et alcalino-terreux notamment peuvent etre mesurées par fluorescence X voire par ICP selon les teneurs présentes. La teneur en SiC et le carbone libre la teneur en Oxygène peuvent être mesurées par LECO. La teneur en Si libre ou phase métallique de silicium peut être déterminée par diffraction des rayons X. La teneur en carbone libre du matériau fritté de carbure de silicium et/ ou de bore est calculée par différence entre la teneur en carbone totale mesurée par LECO et la teneur en carbone liée sous forme de carbures, en particulier de silicium et de bore incluant les phases SiC, B4C, voire CW quantifiées par diffraction aux rayons X.

- Le diamètre médian des particules (ou la « taille » médiane) des particules constituant une poudre, est donnée au sens de la présente invention par une caractérisation de distribution granulométrique, en particulier au moyen d'un granulomètre laser. La caractérisation de distribution granulométrique est réalisée classiquement avec un granulomètre laser conformément à la norme ISO 13320-1. Le granulomètre laser peut être, par exemple, un Partica LA-950 de la société HORIBA. Au sens de la présente description et sauf mention contraire, le diamètre médian des particules désigne respectivement le diamètre des particules au-dessous duquel se trouve 50% en masse de la population. On appelle « diamètre médian » ou « taille médiane » d'un ensemble de particules, en particulier d'une poudre, le percentile $D_{50}$, c'est-à-dire la taille divisant les particules en première et deuxième populations égales en volume, ces première et deuxième populations ne comportant que des particules présentant une taille supérieure, ou inférieure respectivement, à la taille médiane.

Sauf indication contraire, dans la présente description, tous les pourcentages sont des pourcentages massiques.

L'élément de blindage selon l'invention permet notamment une protection contre tout type de projectiles, par exemple une balle, un obus, une mine ou un élément projeté lors de la détonation d'explosifs, comme des boulons, des clous (ou IED pour «Improvised Explosive Device») et constitue normalement un élément d'armure pour les personnes ou les véhicules, généralement sous forme de modules comme des plaques.

Selon l'invention, l'élément de protection comprend au moins deux couches : une première pièce en céramique telle que décrite précédemment associée à un autre matériau moins dur et préférentiellement ductile, en face arrière, classiquement appelé « backing », tel que des fibres de polyéthylène (ex : Tensylon™, Dyneema®, Spectra™), d'aramide (ex : Twaron™, Kevlar®), des fibres de verre, ou des métaux comme par exemple l'acier ou les alliages d'aluminium, sous la forme de plaques. Des colles, par exemple à base de polyuréthane ou polymères époxyde, sont utilisées pour lier les différents éléments constituant la plaque de blindage.

Sous l'impact des projectiles, le corps céramique se fragmente et a pour rôle principal de briser les noyaux des projectiles. Le rôle de la face arrière, associée au matériau céramique constituant le corps céramique, est de consommer l'énergie cinétique des débris et de maintenir un certain niveau de confinement sur la plaque de céramique, optimisé encore par l'enveloppe de confinement.

Un corps céramique selon l'invention peut être en particulier obtenu par un procédé de frittage, en particulier un procédé de frittage en phase solide ou liquide comprenant les étapes suivantes :

a) préparation d'une charge de départ comportant au moins une poudre de particules de céramique, de préférence au moins une poudre d'un additif de frittage, et l'ajout de porogènes de manière à générer une porosité au sein du corps céramique après frittage, afin d'obtenir un mélange homogène,

b) mise en forme de la charge de départ sous la forme d'une préforme,

c) frittage de ladite préforme comprenant une étape de déliantage afin de vaporiser tout partie du porogène de manière à obtenir un produit selon l'invention.

Dans un tel procédé on utilise une poudre initiale de particules céramiques, par exemple de carbure de silicium, dont le diamètre médian des particules est supérieur à 0,1 micromètres, de préférence supérieur à 0,3 micromètres, et inférieur à 50 micromètres, de préférence inférieur à 40 micromètres, de préférence inférieur à 30 micromètres, de préférence inférieur à 20 micromètres, de préférence inférieur à 10 micromètres, de préférence inférieur à 5 micromètres, et de préférence est inférieur à 4 micromètres, voire même inférieur à 3 micromètres ou même inférieur à 1 micromètre.

L'additif de frittage dépend de la nature chimique des grains céramiques. Par exemple dans le cas de particules de carbure de silicium, l'additif de frittage est choisi de préférence parmi le carbone, les carbures de bore, de titane, de zirconium ou les borures de zirconium, de titane, seuls ou en mélange. Dans un mode particulièrement préféré, le produit est obtenu par un procédé tel que décrit précédemment dans lequel l'additif de frittage comprend ou est constitué par un mélange de carbure de bore et de carbone.

Un procédé de fabrication du matériau fritté du corps céramique de l'élément de blindage selon l'invention peut comprendre les étapes suivantes :

a) préparation d'une charge de départ comportant :

- une poudre de particules de céramique, dont le diamètre médian des particules est compris entre 0,1 et 30 micromètres,
- de préférence au moins une poudre d'un additif de frittage,
- une poudre de porogène choisi parmi le polyéthylène ; le polystyrène ; les polymétacrylates, les chlorures de polyvinyle (PVC) ; l'acétate de cellulose, les résines époxy ou polyimides ; ou leur dérivés ou un mélange de ces produits, dont le diamètre médian des particules est compris entre 60 et 80 micromètres,

b) mise en forme de la charge de départ sous la forme d'une préforme,

c) frittage en phase solide de ladite préforme comprenant une étape de déliantage afin de vaporiser tout partie du porogène de manière à obtenir un produit selon l'invention.

On donne ci-après des indications plus détaillées concernant un procédé permettant d'obtenir le matériau fritté selon l'invention :

La poudre de particules céramiques peut être obtenue également par réduction de taille d'une poudre initiale plus grossière. Cette réduction de taille est généralement effectuée par broyage selon des techniques connues de l'homme du métier, comme par exemple un broyeur à billes, un broyeur à jarre, avec des billes en céramiques de préférence de même composition chimique que les grains céramiques.

De préférence, la taille médiane de la poudre de particules céramiques, après broyage éventuel, est inférieure à 5 micromètres, de préférence inférieure à 4 micromètres, de préférence inférieure à 3 micromètres, de préférence inférieure à 2 micromètres, de préférence inférieure à 1,5 micromètres. De préférence, dans le cas d'une poudre de carbure de silicium celle-ci présente une teneur en élément oxygène inférieure à 2%, de préférence inférieure à 1,6%, de préférence inférieure à 1,4%, de préférence inférieure à 1,2%, de préférence inférieure à 1%, voire inférieure à 0,7%, voire inférieure à 0,5%, voire même inférieure à 0,3% poids. Dans un mode de réalisation, la teneur en élément oxygène de la poudre de carbure de silicium peut être diminuée avant utilisation par toute technique connue de l'homme du métier, comme par exemple un lavage à l'acide.

La quantité d'additifs de frittage en phase solide est de préférence comprise entre 0,1% et 6% poids de la charge minérale de départ, c'est-à-dire la ou les poudres de grains céramiques et les ajouts de frittage. Les agents porogènes et les additifs de façonnage destinés à être vaporisés lors du séchage ou du déliantage ne font pas partie de la charge minérale de départ Dans le cas d'un matériau fritté de carbure de silicium, les additifs de frittage en phase solide peuvent être de préférence choisis parmi les composés comprenant les éléments bore, titane, zirconium et le carbone, tels que des carbures, comme $B_4C$, TiC, des borures, comme ZrB2, TiB2, ainsi que des précurseurs desdits composés, et/ou des précurseurs de carbone libre, comme une résine phénolique.

Dans un mode de réalisation particulièrement préféré, les additifs de frittage en phase solide utilisés sont un mélange de carbure de bore $B_4C$ et de résine carbonée, la quantité de $B_4C$ étant supérieure à 0,1%, de préférence supérieure à 0,2% et inférieure à 0,7%, en pourcentage poids de la charge minérale de départ et la quantité de carbone apportée par la résine carbonée est supérieure à 0,1%, de préférence supérieure à 0,3%, de préférence encore supérieure à 0,6% et inférieure à 3%, de préférence inférieure à 2%, en pourcentage poids de la charge minérale de départ.

Dans un autre mode de réalisation possible, l'additif de frittage en phase solide utilisé est B4C en une quantité supérieure à 0,1%, de préférence supérieure à 0,2% et inférieure à 0,7%, de préférence inférieure à 0,6%, voire inférieure à 0,5%, voire inférieure à 0,4% en pourcentage poids de la charge de départ et la teneur en oxygène élémentaire de la poudre de carbure de silicium de la charge de départ est inférieure à 0,3%. Dans un autre mode de réalisation possible, l'additif de frittage en phase solide utilisé est du carbone en une quantité supérieure à 0,1%, de préférence supérieure à 0,3%, de préférence encore supérieure à 0,6% et inférieure à 3%, de préférence inférieure à 2%, de préférence inférieure à 1,5%, voire inférieure à 1%, voire inférieure à 0,8% en pourcentage poids de la charge de départ.

Dans un mode de réalisation, la charge de départ contient un liant et/ou un lubrifiant et/ou un agent tensio-actif. Dans un mode de réalisation, la masse de liant et/ou un lubrifiant et/ou un agent tensio-actif représente entre 5 et 15% de la masse de charge minérale de départ.

Le mélange contient au moins un agent porogène qui est vaporisé pendant le frittage. De préférence les agents porogènes sont choisis parmi le polyéthylène ; le polystyrène ; les polymétacrylates, les chlorures de polyvinyle (PVC) ; l'acétate de cellulose, les résines époxy ou polyimides ; ou leurs dérivés ou un mélange de ces produits. L'apport de porogènes est réalisé sous forme de particules dont le diamètre est de préférence compris entre 40 et 120 micromètres, de préférence entre 50 et 100 micromètres, selon la densité du porogène utilisé.

Selon un mode possible, dans le cas d'un matériau fritté de carbure de silicium, l'agent porogène est de préférence sous forme d'une poudre qui présente une taille médiane $D_{50}$ de particules comprise entre 60 et 80 micromètres. De préférence le ratio $(D_{90}-D_{10})/D_{50}$ inférieur à 0,65, de préférence inférieur à 0,5, voire inférieur à 0,4 ou même inférieur à 0,3. La quantité d'agent porogène est inférieur à 3% % poids de la charge minérale de départ. Selon un mode possible les particules sont des billes ou des sphères. Selon un autre de mode possible, les particules sont des fibres organiques. La poudre est de préférence une poudre de PMMA.

Le mélange est effectué de manière à obtenir une bonne homogénéité de distribution des différents éléments, le temps de mélange pouvant être adapté pour atteindre ce résultat.

De préférence, le mélange s'effectue dans un broyeur à jarre, le temps de mélange est supérieur à 15 heures. Un temps de mélange de 24 heures est bien adapté. Lorsque le mélange est obtenu, celui peut être atomisé ou granulé, par exemple par «freeze granulation», afin d'obtenir des granules de préférence de diamètre médian compris entre 50 et 150 micromètres qui seront mises en forme, par exemple par pressage afin d'obtenir une préforme en céramique. D'autres techniques de mise en forme peuvent être utilisées, comme l'injection, le coulage en barbotine.

Après mise en forme, la préforme peut-être aussi usinée.

La mise en forme peut être réalisée par coulage, pressage, extrusion, injection-moulage.

La préforme est ensuite frittée. Le frittage peut s'effectuer sans ou avec pression appliquée sur la préforme lors du frittage. Des techniques de pressage à chaud (ou « Hot Pressing »), de pressage isostatique à chaud (ou « Hot Isostatique Pressing ») ou de SPS (« Spark Plasma Sintering ») sont particulièrement adaptées. La température de frittage est supérieure à 1700°C, de préférence supérieure à 1800 °C, de préférence supérieure à 1850°C, voire supérieure à 1950°C et inférieure à 2300°C, voire inférieure à 2200°C. Le procédé comprend selon la technologie bien connue de l'homme du métier une étape de déliantage avant ou pendant l'étape de frittage. Cette étape permettant de vaporiser les additifs de mise en forme et les porogènes est réalisée typiquement à une température inférieure à 1000°C. La température, la durée du déliantage dépend de la nature du porogène et des liants mais aussi de la charge du four dans lequel est réalisée l'opération de déliantage.

Si une pression est appliquée pendant le frittage, cette pression est supérieure à 10 MPa, de préférence supérieure à 20MPa, de préférence supérieure à 35 MPa et inférieure à 500 MPa, de préférence inférieure à 300 MPa, voire inférieure à 200 MPa, voire inférieure à 100 MPa, voire inférieure à 75MPa, voire inférieure à 55 MPa.

Le temps de maintien en palier lors du frittage à haute température peut être nul, en particulier lors d'un frittage par SPS. De préférence ce temps de maintien est supérieur à 0,5 minutes, de préférence supérieur à 1 minute, de préférence supérieur à 2 minutes, de préférence supérieur à 4 minutes et inférieur à 120 minutes, voire inférieur à 90 minutes, inférieur à 60 minutes, de préférence inférieur 30 minutes, de préférence inférieur à 20 minutes, de préférence inférieure à 10 minutes, de préférence inférieur à 6 minutes. Un temps de frittage égal à 5 minutes est bien adapté. La vitesse de montée à la température maximale est de préférence supérieure à 10°C/min, voire supérieure à 30°C/min, voire supérieure à 50°C/min, voire supérieure à 100°C/min.

La cuisson a lieu sous atmosphère contrôlée non oxydante, de préférence sous vide ou sous argon ou sous azote.

Figures :

La figure 1 est une image prise au microscope à balayage d'une section polie du matériau fritté du corps céramique de l'exemple 2 selon l'invention.

Les figures 2 et 3 montrent le schéma de fracturation d'un élément de blindage respectivement de l'exemple 4 (comparatif) et de l'exemple 2 (selon l'invention) à la suite de tirs successifs de munitions 7, 62x51mm P80 comme décrits dans les exemples.

Les figures 4 et 5 montrent la distribution en volume de la sphéricité des pores en fonction de leur diamètre médian en micromètres mesuré par tomographie selon la technique expliquée précédemment, respectivement pour l'exemple 2 (selon l'invention) et pour l'exemple 3 (comparatif).

Les exemples qui suivent sont donnés à titre purement illustratif et ne limitent sous aucun des aspects décrits la portée de la présente invention.

Exemples:

Dans tous les exemples qui suivent, des corps céramiques sous la forme de plaques, de format 100mm×100mm et d'épaisseur 7 à 10 mm, ont été initialement réalisés par pressage d'un mélange de poudres atomisé.

Le mélange de façonnage de l'exemple 1 (comparatif) a été réalisé de la même manière que décrit dans l'exemple 1 de US5589428. Celui de l'exemple 2 (selon l'invention) se différentie en ce que la poudre de PMMA utilisée présente une distribution de diamètre sensiblement plus étroite. L'exemple 3 (comparatif) se différentie de l'exemple 1 en ce que son diamètre médian de porogène est plus élevé. L'exemple 4 (comparatif), à la différence des exemples précédents, ne contient pas de porogène ajouté sous forme de billes de PMMA.

Les formulations des différents exemples ont été reportées dans le tableau 1 ci-après.

[Tableau 1]

| % massiques | Exemple 1 (comparatif) | Exemple 2 (invention) | Exemple 3 (comparatif) | Exemple 4 (comparatif) |
|---|---|---|---|---|
| Poudre SiC vert -325 mesh Norton SIKA broyée à 0,45 $\mu$m | 94,78 | 94,78 | 94,78 | 94,78 |
| Poudre B4C Norbide Boron Carbide® $D_{50}$ = 3,6$\mu$m | 0,66 | 0,66 | 0,66 | 0,66 |
| résine phénolique Plyophen 43290 d'Occidental Chemical Company comprenant 42,5% de coke en masse | 4,56 | 4,56 | 4,56 | 4,56 |
| total charge minérale % | 100 | 100 | 100 | 100 |
| Ajout d'agent porogène %<br><br>$D_{10}$ ($\mu$m)<br>$D_{50}$($\mu$m)<br>$D_{90}$($\mu$m)<br>(D90-D10)/D50 | +2,84% Billes de PMMA<br><br>53<br>70<br>110<br>0,81 | +0,75% Billes de PMMA<br><br>63<br>70<br>75<br>0,.17 | +1,70% Billes de PMMA<br><br>62<br>85<br>118<br>0,65 | Pas de Billes de PMMA |
| ajouts % par rapport à masse de charge minérale Liant + dispersant ajoutés | +9.00% | +9.00% | +9.00% | +9.00% |

Les corps céramiques ont été mis en forme par coulage.

Les pièces ont été démoulées puis séchées 24h à 110°C avant cuisson sous Argon à 2150°C pendant 1,5 heures.

Pour chaque réalisation, les caractéristiques du corps céramique et la composition des différents matériaux le constituant sont rassemblées dans le tableau 2.

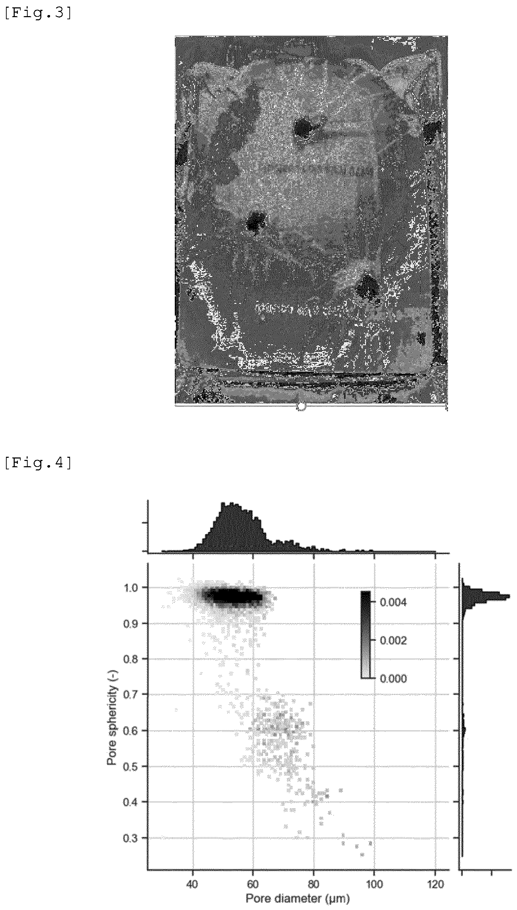

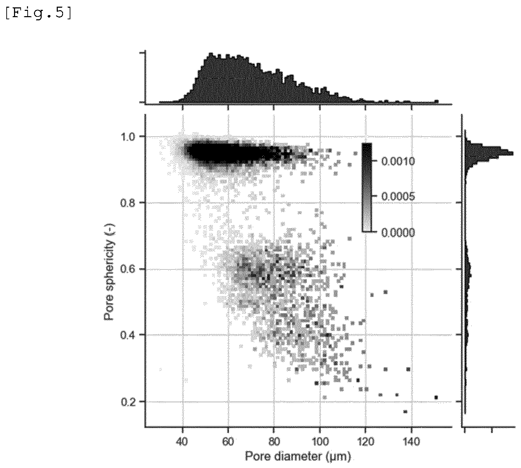

Le diamètre et le volume de pores, ont été déterminés par tomographie aux rayons X à l'aide du CT scanner de l'INSA de Lyon sur la base d'échantillons de taille 3mm*3mm*4mm. La résolution a été adaptée selon le diamètre de pores observés typiquement 3$\mu$m/voxel pour les pores de diamètre supérieur à 30 micromètres et 0,3 $\mu$m/voxel pour les pores de diamètre inférieur à 30 micromètres afin de constituer un diagramme de répartition volumique de pores et calculer les volumes cumulés de pores. Le pourcentage volumique de pores de diamètre supérieur à 30 $\mu$m dont la sphéricité est supérieure à 0,8 a été calculé à partir des courbes montrées dans les figures 4 et 5.

Les diamètres (équivalents) des grains ont pu être déterminés à partir d'images au microscope électronique à balayage d'une section polie dudit matériau fritté traité au réactif Murakami sur une image de dimensions 100×150 micromètres, à partir de laquelle 700 grains ont pu être comptabilisés.

Les teneurs en carbone libre ou résiduel et en Bore ont été mesurées respectivement par LECO et ICP. La forme

cristallographique $\alpha$ du SiC présent a été déterminée par analyse de diffraction aux rayons X.

[Tableau 2]

|  | Exemple 1 (comparatif) | Exemple 2 (invention) | Exemple 3 (comparatif) | Exemple 4 (comparatif) |
|---|---|---|---|---|
| Caractéristiques corps / matériau céramique après cuisson | | | | |
| Caractéristiques microstructurales | | | | |
| Dureté Vickers des grains du matériau fritté (GPa) Mesure selon norme norme ASTM C1327:03 | >10 | | | |
| masse volumique apparente q/cm$^3$ selon ISO 18754 | 3,00 | 3,12 | 3,04 | 3,15 |
| Mesures faites par tomographie aux rayons X et exploitation par analyse d'image 3D | | | | |
| % en nombre de grains de diamètre compris entre 1 et 50 $\mu$m | >95% | | | |
| Diamètre médian de grains en nombre du matériau ($\mu$m) | N.M | 3,9 | 4,1 | 4,0 |
| D10 de grains en nombre du matériau ($\mu$m) | N.M | 2,2 | 2,3 | 2,1 |
| D90 de grains en nombre du matériau ($\mu$m) | N.M | 6,6 | 6,5 | 6,4 |
| Porosité ou volume total de pores % | 7.5 | 2,3 | 4,5 | 1,2 |
| volume cumulé de pores <30 $\mu$m (vol %) | N.M | 0,95 | 1,3 | 1,2 |
| volume cumulé de pores entre 30 et 100 $\mu$m (vol %) | N.M | 1,3 | 2,9 | <0,1 |
| volume cumulé de pores >100 $\mu$m (vol %) | N.M | <0.05 | 0,3 | <0,1 |
| volume cumulé de pores <40 $\mu$m (vol %) | N.M | 0,95 | 1,3 | 1,2 |
| volume cumulé de pores entre 40 et 80 $\mu$m (vol %) | N.M | 1,2 | 2,0 | <0,1 |
| volume cumulé de pores >80 $\mu$m (vol %) | N.M | 0,05 | 1 ,1 | <0,1 |
| Diamètre médian de pores ($D_{50}$) ($\mu$m) | 70 | 48 | 62 | <5 |
| Maximum du 1er pic de pores ($\mu$m) | N.M | <5 | <5 | <5 |
| Maximum du 2eme de pores ($\mu$m) | N.M | 55 | 60 | Aucun |
| Sphéricité moyenne | N.M | 0,94 | 0,88 | N.M |
| Pourcentage volumique de pores de diamètre supérieur à 30 micromètres dont sphéricité est supérieure à 0,8 | N.M | 84% | 66% | N.A |
| composition chimique (% massique ) | | | | |
| Carbure de silicium SiC (LECO) | >98 | >98 | >98 | >98 |
| B (ICP) | <1 | <1 | <1 | <1 |
| Carbone libre (LECO) | <1 | <1 | <1 | <1 |
| N.M = non mesurée ; N.A = non applicable | | | | |

Pour chaque exemple, huit plaques céramiques obtenues selon le procédé décrit précédemment ayant une densité surfacique de 21,2 Kg/m$^2$ ($\pm$ 0,5 Kg/m$^2$) ont été collées sur des plaques métalliques d'aluminium 7020 T6 de 200mm$\times$200mm$\times$5mm.

La densité surfacique $\rho_a$ est calculée selon la formule suivante $\rho_a = t \times \rho_v$ où :

$\rho_a$ est la densité surfacique exprimée en Kg/m$^2$
-t est l'épaisseur de la plaque, exprimée en mm
$\rho_v$ est la masse volumique apparente exprimée en Kg/dm$^3$
typiquement mesurée selon la norme ISO 18754.

Chaque assemblage céramique-métal a été exposé à un tir d'une distance de 15 mètres avec une munition de 7.62×51mm P80 (munition perforante avec noyau acier) selon différentes vitesses d'impact. Un graphe représentant le statut de la perforation (protection ou perforation complète) en fonction de la vitesse d'impact est établi pour chaque exemple. A partir de ce graphe, il est déterminé pour chaque exemple la vélocité médiane V50 à partir de laquelle la probabilité de perforation est de 50%. Une vélocité supérieure à 700 m/s compte tenu de ce type de munition est considérée comme satisfaisante. Une vélocité élevée correspond à une performance balistique d'autant plus élevée que la densité surfacique est faible. Les propriétés balistiques de la plaque de blindage finale sont rassemblées dans le tableau 3 suivant :

[Tableau 3]

| | Exemple 1 (comparatif) | Exemple 2 (invention) | Exemple 3 (comparatif) | Exemple 4 (comparatif) |
|---|---|---|---|---|
| Essais balistiques | | | | |
| Vélocité médiane $V_{50}$ (m/s) pour une densité surfacique de 21,2 kg/dm$^2$ | 721 | 789 | 765 | 752 |

Les résultats regroupés dans le tableau 3 indiquent que le choix du matériau utilisé pour fabriquer un élément de blindage conduit à une Vélocité $V_{50}$ meilleure que les exemples comparatifs. Une plaque de l'exemple 2 selon l'invention a été collée à l'aide d'une colle époxy sur une couche de fibre de verre faisant la liaison avec une plaque de polyéthylène (UHMWPE). L'ensemble est enveloppé dans une couche de tissu de Kevlar collée également au moyen d'une résine époxy pour former un élément de blindage. Un deuxième élément de blindage a également été réalisé de la même manière mais avec une plaque selon l'exemple 4 (comparatif). La performance balistique multi-impact a été évaluée à la suite de tirs successifs de munitions 7, 62x51mm P80. Trois tirs ont été réalisés sur chaque élément d'armure. Les résultats ont été reportés dans le tableau 4.

[Tableau 4]

| | exemple 2 invention | exemple 4 comparatif |
|---|---|---|
| épaisseur (mm) | 8,5 | |
| Forme de la plaque | plane | |
| surface (cm$^2$) | 670 | |
| Caractéristiques revêtement arrière | Fibres de verre + PE haute densité Epaisseur : 17 mm | |
| Caractéristiques enveloppe confinement | Fibres d'aramide (Kevlar®) | |
| ratio masse / surface ( Kg/m$^2$) | 42+/-0.5 | |
| Observation visuelle après les tirs | pas de perforation | pas de perforation |
| Observation | Aucune fissure reliant les trous d'impact | Présence de fissures reliant les trous d'impact, Signe de la fragilisation après plusieurs impacts |

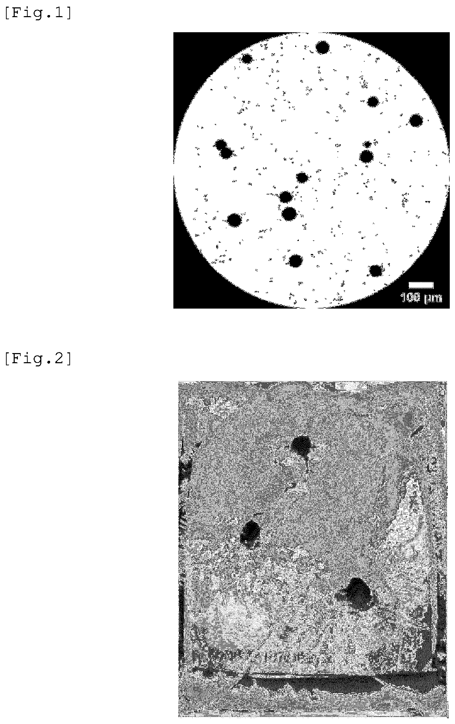

Les résultats de ces essais sont illustrés également par les figures 2 et 3 correspondant respectivement à l'élément de blindage avec un matériau fritté selon l'exemple 4 et selon l'exemple 2 selon l'invention.

Ces derniers résultats montrent que l'élément de blindage selon l'invention dont le corps céramique dont le matériau fritté présente une distribution de diamètre de pores contrôlée à une résistance multi impacts améliorée. Cela est lié à la capacité de la céramique à 'localiser' l'endommagement après un impact, laissant une zone saine (sans fissures) plus importante pour stopper les impacts suivants.

En outre, la comparaison des figures 4 et 5 (exemple comparatif) montre également que l'exemple selon l'invention (figure 4) présente une plus faible proportion de pores allongés parmi les pores de plus grande taille, ce qui indique une plus faible agglomération des pores et par suite une meilleure répartition des pores dans le matériau selon l'invention.

**Revendications**

1. Elément de blindage antibalistique, comprenant un corps céramique comprenant un matériau fritté constitué de grains céramiques de dureté Vickers supérieure à 5 GPa, le volume total des pores dudit matériau étant compris entre 0,5 et 10%, ledit corps céramique étant **caractérisé en ce que** :

    - le volume cumulé des pores de diamètre compris entre 30 et 100 micromètres représente entre 0,2 et 2,5% du volume dudit matériau,
    - le volume cumulé des pores de diamètre supérieur à 100 micromètres est inferieur a 0,2% du volume dudit matériau,
    - le reste dudit volume total de pores étant constitué par des pores dont le diamètre est inférieur à 30 micromètres, dans lequel la distribution en volume du diamètre des pores dudit matériau est multimodale et comprend au moins un premier pic dont le maximum est compris dans un intervalle de diamètre de pores compris entre 0,1 et 15 micromètres et un deuxième pic dont le maximum est compris dans un intervalle de diamètre de pores compris entre 40 et 80 micromètres,
    le volume et le diamètre des pores sont mesurés selon la déscription.

2. Elément de blindage selon la revendication 1, dans lequel au moins 95% desdits grains céramiques ont un diamètre compris entre 1 et 50 micromètres.

3. Elément de blindage selon la revendication 1 ou 2, dans lequel le volume cumulé des pores dudit matériau de diamètre compris entre 30 et 100 micromètres est supérieur à 0,3% et/ou inférieur à 2,3% du volume dudit matériau.

4. Elément de blindage selon l'une des revendications précédentes, dans lequel le volume cumulé des pores dudit matériau de diamètre supérieur à 80 micromètres est inférieure à 0,8% du volume dudit matériau.

5. Elément de blindage selon l'une des revendications précédentes, dans lequel le volume cumulé des pores dudit matériau de diamètre compris entre 40 et 80 micromètres est supérieur à 0,5% et/ou inférieur à 1,5% du volume dudit matériau.

6. Elément de blindage selon l'une des revendications précédentes, dans lequel le volume cumulé des pores dudit matériau de diamètre inférieur à 40 micromètres est inférieur 1,5% du volume dudit matériau.

7. Elément de blindage selon l'une des revendications précédentes, dans lequel la distribution en volume du diamètre des pores dudit matériau est bimodale.

8. Elément de blindage selon l'une des revendications précédentes, dans lequel au moins 70% en volume des pores dudit matériau de diamètre supérieur à 30 micromètres présentent une sphéricité supérieure à 0,8.

9. Elément de blindage selon l'une des revendications précédentes, dans lequel ledit corps céramique est monolithique et présente une surface d'impact supérieure à 2 cm$^2$ et une épaisseur supérieure à 3 mm.

10. Elément de blindage selon l'une des revendications précédentes, dans lequel les grains dudit matériau fritté sont des grains d'alumine, de carbure de silicium, de carbure de bore, ou comprennent un borure.

11. Elément de blindage selon la revendication précédente, dans lequel les grains sont en carbure de silicium, dont au moins 95% ont un diamètre supérieur à 2 micromètres et/ou inférieur à 30 micromètres et sont de préférence sous forme cristallographique alpha $\alpha$.

12. Elément de blindage selon l'une des revendications précédentes, dans lequel le corps céramique est choisi parmi une plaque, un plastron, un casque, un élément de carrosserie d'un véhicule, un tube.

13. Elément de blindage selon l'une des revendications précédentes, comprenant un corps céramique comprenant un matériau, muni sur sa face intérieure ou opposée à la face d'impact d'un revêtement arrière de dissipation de l'énergie, constitué dans un matériau de dureté inférieure à celui du matériau constituant le corps céramique, dans lequel le matériau constituant le revêtement arrière est choisi parmi les polyéthylènes PE, notamment les polyéthylènes ultra haute densité (UHMPE), les fibres de verre ou de carbone, les aramides, les métaux tel que l'aluminium, le titane ou leur alliages ou l'acier.

**14.** Elément de blindage selon la revendication précédente, dans laquelle l'ensemble corps céramique- revêtement arrière est entouré par une enveloppe d'un matériau de confinement, ledit matériau constituant l'enveloppe étant choisi parmi les polyéthylènes PE, notamment les polyéthylènes ultra haute densité (UHMPE), les fibres de verre ou de carbone, les aramides, les métaux tel que l'aluminium ou l'acier.

**15.** Utilisation de l'élément de blindage selon la revendication 1 à 14, comme protection antibalistique d'une personne ou d'un véhicule terrestre, maritime ou aérien ou d'une installation fixe comme un bâtiment, un mur d'enceinte, ou un poste de garde, en particulier sous la forme d'une plaque, d'une tuile, d'une mosaïque, par exemple sous forme d'hexagones ou de nodules, d'un plastron, d'un bouclier, d'un casque, d'un élément de carrosserie d'un véhicule tel qu'une porte, d'un siège, d'un tube.

**Patentansprüche**

**1.** Antiballistisches Panzerungselement, umfassend einen Keramikkörper umfassend ein gesintertes Material, bestehend aus Keramikkörnern mit einer Vickershärte von mehr als 5 GPa, wobei das Gesamtporenvolumen des Materials zwischen 0,5 und 10 % liegt, wobei der Keramikkörper
**dadurch gekennzeichnet ist, dass:**

- das kumulierte Volumen der Poren mit einem Durchmesser zwischen 30 und 100 Mikrometern zwischen 0,2 und 2,5 % des Volumens des Materials beträgt,
- das kumulierte Volumen der Poren mit einem Durchmesser von über 100 Mikrometern weniger als 0,2 % des Volumens des Materials beträgt,
- der Rest des gesamten Porenvolumens aus Poren mit einem Durchmesser von weniger als 30 Mikrometern besteht,

wobei die Volumenverteilung des Durchmessers der Poren des Materials multimodal ist und mindestens einen ersten Peak umfasst, dessen Maximum in einem Porendurchmesserintervall zwischen 0,1 und 15 Mikrometern liegt, und einen zweiten Peak, dessen Maximum in einem Porendurchmesserintervall zwischen 40 und 80 Mikrometern liegt, wobei das Volumen und der Porendurchmesser gemäß der Beschreibung gemessen werden.

**2.** Panzerungselement nach Anspruch 1, wobei mindestens 95 % der Keramikkörner einen Durchmesser zwischen 1 und 50 Mikrometern aufweisen.

**3.** Panzerungselement nach Anspruch 1 oder 2, wobei das kumulierte Volumen der Poren des Materials mit einem Durchmesser zwischen 30 und 100 Mikrometern größer als 0,3 % und/oder kleiner als 2,3 % des Volumens des Materials ist.

**4.** Panzerungselement nach einem der vorhergehenden Ansprüche, wobei das kumulierte Volumen der Poren des Materials mit einem Durchmesser von mehr als 80 Mikrometern weniger als 0,8 % des Volumens des Materials beträgt.

**5.** Panzerungselement nach einem der vorhergehenden Ansprüche, wobei das kumulierte Volumen der Poren des Materials mit einem Durchmesser zwischen 40 und 80 Mikrometern größer als 0,5 % und/oder kleiner als 1,5 % des Volumens des Materials ist.

**6.** Panzerungselement nach einem der vorhergehenden Ansprüche, wobei das kumulierte Volumen der Poren des Materials mit einem Durchmesser von weniger als 40 Mikrometern weniger als 1,5 % des Volumens des Materials beträgt.

**7.** Panzerungselement nach einem der vorhergehenden Ansprüche, wobei die Volumenverteilung des Porendurchmessers des Materials bimodal ist.

**8.** Panzerungselement nach einem der vorhergehenden Ansprüche, wobei mindestens 70 Vol.-% der Poren des Materials mit einem Durchmesser größer als 30 Mikrometer eine Sphärizität größer als 0,8 aufweisen.

**9.** Panzerungselement nach einem der vorhergehenden Ansprüche, wobei der Keramikkörper monolithisch ist und eine Aufprallfläche von mehr als 2 cm$^2$ und einer Dicke von mehr als 3 mm aufweist.

10. Panzerungselement nach einem der vorhergehenden Ansprüche, wobei die Körner des gesinterten Materials Körner aus Aluminiumoxid, Siliziumkarbid, Borkarbid sind oder ein Borid umfassen.

11. Panzerungselement nach dem vorhergehenden Anspruch, wobei die Körner aus Siliziumkarbid bestehen, wobei mindestens 95 % davon einen Durchmesser größer als 2 Mikrometer und/oder kleiner als 30 Mikrometer aufweisen und vorzugsweise in der kristallographischen Form alpha $\alpha$ vorliegen.

12. Panzerungselement nach einem der vorhergehenden Ansprüche, wobei der Keramikkörper ausgewählt ist aus einer Platte, einem Brustpanzer, einem Helm, einem Karosserieteil eines Fahrzeugs, einem Rohr.

13. Panzerungselement nach einem der vorhergehenden Ansprüche, umfassend einen Keramikkörper umfassend ein Material, das auf seiner Innenseite oder der der Aufprallfläche gegenüberliegenden Seite mit einer energiedissipativen rückseitigen Beschichtung versehen ist, die aus einem Material besteht, dessen Härte geringer ist als die des Materials, aus dem der Keramikkörper besteht, wobei das Material, aus dem die rückseitige Beschichtung besteht, aus Polyethylen PE, insbesondere Polyethylen mit ultrahoher Dichte (UHMPE), Glas- oder Kohlenstofffasern, Aramiden, Metallen wie Aluminium, Titan oder deren Legierungen oder Stahl ausgewählt ist.

14. Panzerungselement nach dem vorhergehenden Anspruch, wobei die Einheit aus Keramikkörper und Rückseitenbeschichtung von einer Hülle aus einem Einschlussmaterial umgeben ist, wobei das die Hülle bildende Material aus Polyethylenen (PE), insbesondere Polyethylenen mit ultrahoher Dichte (UHMPE), Glas- oder Kohlenstofffasern, Aramiden und Metallen wie Aluminium oder Stahl ausgewählt ist.

15. Verwendung des Panzerungselements nach Anspruch 1 bis 14 als antiballistischer Schutz für eine Person oder ein Land-, See- oder Luftfahrzeug oder eine feste Anlage wie ein Gebäude, eine Umfassungsmauer oder einen Wachposten, insbesondere in Form einer Platte, einer Fliese, eines Mosaiks, beispielsweise in Form von Sechsecken oder Knoten, eines Brustpanzers, eines Schildes, eines Helms, eines Karosserieelements eines Fahrzeugs wie einer Tür, eines Sitzes, eines Rohrs,

**Claims**

1. An anti-ballistic armor element, comprising a ceramic body comprising a sintered material consisting of ceramic grains with a Vickers hardness greater than 5 GPa, the total volume of the pores of said material being between 0.5 and 10%, said ceramic body being **characterized in that:**

   - the cumulative volume of pores with a diameter between 30 and 100 micrometers represents between 0.2 and 2.5% of the volume of said material,
   - the cumulative volume of pores with a diameter greater than 100 micrometers is less than 0.2% of the volume of said material,
   - the remainder of said total pore volume consisting of pores with a diameter of less than 30 micrometers,

   the distribution by volume of the pore diameter of said material being multimodal and comprising at least a first peak, the maximum of which is comprised in a range of pore diameters of between 0.1 and 15 micrometers, and a second peak, the maximum of which is comprised in a range of pore diameters of between 40 and 80 micrometers, the volume and the diameter of the pores being measured according to the description.

2. The armor element according to claim 1, wherein at least 95% of said ceramic grains have a diameter of between 1 and 50 micrometers.

3. The armor element according to claim 1 or 2, wherein the cumulative volume of the pores of said material with a diameter of between 30 and 100 micrometers is greater than 0.3% and/or less than 2.3% of the volume of said material.

4. The armor element according to any of the preceding claims, wherein the cumulative volume of the pores of said material with a diameter greater than 80 micrometers is less than 0.8% of the volume of said material.

5. The armor element according to any of the preceding claims, wherein the cumulative volume of the pores of said material with a diameter of between 40 and 80 micrometers is greater than 0.5% and/or less than 1.5% of the volume of said material.

6. The armor element according to any of the preceding claims, wherein the cumulative volume of the pores of said material with a diameter less than 40 micrometers is less than 1.5% of the volume of said material.

7. The armor element according to any of the preceding claims, wherein the distribution by volume of the pore diameter of said material is bimodal.

8. The armor element according to any of the preceding claims, wherein at least 70% by volume of the pores of said material with a diameter greater than 30 micrometers have a sphericity greater than 0.8.

9. The armor element according to any of the preceding claims, wherein said ceramic body is monolithic and has an impact surface greater than 2 cm$^2$ and a thickness greater than 3 mm.

10. The armor element according to any of the preceding claims, wherein the grains of said sintered material are grains of alumina, silicon carbide, boron carbide, or comprise a boride.

11. The armor element according to the preceding claim, wherein the grains are made of silicon carbide, of which at least 95% have a diameter greater than 2 micrometers and/or less than 30 micrometers and have preferably an alpha $\alpha$ crystal structure.

12. The armor element according to any of the preceding claims, wherein the ceramic body is chosen from among a plate, a breastplate, a helmet, a vehicle bodywork element, a tube.

13. The armor element according to any of the preceding claims, comprising a ceramic body comprising a material, provided on its inner face or opposite the impact face with a rear energy-dissipation coating, consisting of a material with a hardness lower than that of the material constituting the ceramic body, wherein the material that constitutes the rear coating is chosen from among polyethylenes PE, in particular ultra-high density polyethylenes (UHMPE), glass or carbon fibers, aramids, metals such as aluminum, titanium or their alloys, or steel.

14. The armor element according to the preceding claim, wherein the ceramic body-rear coating assembly is surrounded by an envelope of a confinement material, said material constituting the envelope being chosen from among polyethylenes PE, in particular ultra-high density polyethylenes (UHMPE), glass or carbon fibers, aramids, metals such as aluminum or steel.

15. A use of the armor element according to claim 1 to 14, as anti-ballistic protection of a person or of a land, sea or air vehicle, or of a fixed installation such as a building, an enclosure wall, or a guardhouse, in particular in the form of a plate, a tile, a mosaic, for example in the form of hexagons or nodules, of a breastplate, a shield, a helmet, a bodywork element of a vehicle such as a door, a seat, a tube.

[Fig.1]

[Fig.2]

[Fig.3]

[Fig.4]

[Fig.5]

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- JP 2005247622 A
- US 4604249 A
- US 4415632 A
- US 6609452 B1
- US 6862970 B2
- US 4004934 A
- US 4179299 A
- WO 2007126784 A2
- WO 2013186453 A1
- US 2008227618 A
- US 5589428 A